(19) Europäisches Patentamt
European Patent Office
Office européen des brevets

(11) **EP 3 418 678 A1**

(12) **EUROPEAN PATENT APPLICATION**

(43) Date of publication:
**26.12.2018 Bulletin 2018/52**

(51) Int Cl.:
**G01B 9/02** (2006.01)     **G01B 9/04** (2006.01)
**G02B 21/00** (2006.01)

(21) Application number: **18179460.3**

(22) Date of filing: **25.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2017   DE 102017114023**

(71) Applicant: **SmarAct Holding GmbH 26135 Oldenburg (DE)**

(72) Inventors:
• **Rode, Sebastian**
  **49246 Löningen (DE)**
• **Schaap, Iwan Alexander Taco**
  **37083 Göttingen (DE)**
• **Baune, Christoph**
  **26122 Oldenburg (DE)**
• **Lherbette, Michael Luarent**
  **26123 Oldenburg (DE)**

(74) Representative: **Eisenführ Speiser Patentanwälte Rechtsanwälte PartGmbB Postfach 10 60 78 28060 Bremen (DE)**

(54)     **METHOD AND DETECTOR FOR IMAGING IN CORRELATION WITH INTERFEROMETRY**

(57)     The present invention relates to a method and a detector (design) for correlative scanning imaging and interferometry and in particular to an interferometer device for measuring a distance to and/or motion of a surface of a sample using a laser beam directed to and focused on the surface, a system including such interferometer device and an interferometry and imaging method. In order to provide for a simplified approach on combining imaging and interferometry without the need for a multi-element image sensor (camera), which, in particular in the context of an interferometry device employing fibre optics allows for a more versatile range of possible uses. An interferometer device is proposed for measuring a distance to and/or motion of a surface of a sample (24) using a laser beam directed to and focused on the surface, comprising a light source (18) providing the laser beam which is separated into a reference beam and a measurement beam, wherein the device, in addition to interferometry, is arranged to detect an intensity of a reflection of the laser beam from the surface, so to allow for an imaging of the surface, wherein a detection path of the device is arranged to provide an intensity signal that is independent on the superposition of the reference beam and a reflection of the measurement beam from the surface.

Fig. 1

## Description

The present invention relates to a method and a detector (design) for correlative scanning imaging and interferometry and in particular to an interferometer device for measuring a distance to and/or motion of a surface of a sample using a laser beam directed to and focused on the surface, a system including such interferometer device and an interferometry and imaging method.

In interferometry, a laser beam can be used to measure a distance to the surface of a sample and/or to measure a motion of a sample with high accuracy and sensitivity. There is an increasing need to be able to measure smaller samples, which can be achieved by focusing the laser beam. Thus, the measurement area becomes limited to a single point, namely there where the laser spot hits the surface. The minimum size of the spot is determined by optical diffraction and can reach sub-micrometer dimensions when microscope objectives are used.

However, in many cases it is desirable to image the structure around this measured point, for example to be able to decide if the measured point is representative for the whole sample or to specially measure certain structural features of a sample.

The use of a raster-scanned focused laser beam to produce microscopic images is widely known as confocal microscopy. Interferometers have been combined with confocal microscopes to be able to measure on small samples with high spatial resolution, as described, for example, in the article "Laser interferometer microscope for the measurement of nanometer vibrational displacements of a light-scattering microscopic object" by S.M. van Netten (The Journal of the Acoustical Society of America 83, 1667 (1988); doi: 10.1121/1.395922), in EP 0 352 789 A2, of in the article "Versatile microscopic profilometer-vibrometer for static and dynamic characterization of micromechanical devices" by. A. Bosseboeuf et al. (Proc. SPIE 3825, Microsystems Metrology and Inspection, 123 (September 15, 1999); doi:10.1117/12.364293). Often such systems are used in combination with a wide-field camera (see the article by A. Bosseboeuf et al.), so that the user can observe the position of the focused laser beam on the sample through the optical microscope. In EP 1 870 761 A1 the application of a combined interferometer-confocal microscope is described to perform interferometry measurements in a raster scan. From the successive interferometry measurements at different spatial positions a vibration map of the sample can be reconstructed.

The addition of microscope optics and a camera, as in the prior art discussed above, increase the complexity and costs of the combined instrument. The complexity additionally may result in added vibrations and even positional drift. Furthermore, the size and fragility of such a combined instrument prevents its operation in constrained or harsh environments.

In cases where an additional camera and microscopy optics are used to generate an overview image of the sample, the position of this image with respect to the measurement point of the interferometer will need to be determined. This can be done manually by observing the position of the focused laser spot through the microscope or with image processing software that recognizes the focused laser spot and determines its position. Such a calibration, however, needs to be performed regularly and will be sensitive to drift because the optical paths of the optical microscope and the interferometer are in part independent.

If an additional camera and microscopy optics are used to generate an overview image of the sample this requires the wavelength of the used laser to lie within the spectral spectrum of the used camera. This excludes the use of infrared light with a wavelength of more than 1000 nm as this cannot be imaged with conventional cameras. In DE102009049932, a camera combined with a target cross is employed to position a focused laser beam with a wavelength of more than 1100 nm on a target.

When interferometry is performed with a focused laser beam then also the measured distance or motion can be used as information to generate one pixel of an image. When the beam is raster scanned, a height or vibration image of the sample can be generated. However, when at certain pixels the reflectivity of the sample is too low the signal will be lost and a distance cannot be measured. As result, the image will be incomplete and potentially the relation between the reported distances for the individual pixels will be inaccurate. Therefore, such a height or vibration image cannot replace the need for a reflection or intensity image of the sample.

An aim underlying the present invention is to provide for a simplified approach on combining imaging and interferometry, which, in particular in the context of an interferometry device employing fibre optics allows for a more versatile range of possible uses.

According to a first aspect of the invention, an interferometer device for measuring a distance to and/or motion of a surface of a sample using a laser beam directed to and focused on the surface is proposed as defined in claim 1, in particular comprising a light source providing the laser beam which is separated into a reference beam and a measurement beam, wherein the device, in addition to interferometry, is arranged to detect an intensity of a reflection of the laser beam from the surface, so to allow for an imaging of the surface, wherein a detection path of the device is arranged to provide an intensity signal that is independent on the superposition of the reference beam and a reflection of the measurement beam from the surface.

According to a second aspect of the invention, an interferometry and imaging method is proposed as defined in claim 9, in particular comprising providing a laser beam which is separated into a reference beam and a measurement beam, arranging a detection path to provide an intensity signal that is independent on the superposition of the reference beam and a reflection of the measurement beam from the surface, and detecting the intensity of a reflection of the laser beam from the surface, so to allow for an imaging of the surface, wherein the method comprises, concurrent with or in addition to the detecting step, an interferometry step for measuring a distance to and/or motion of a surface of a sample using the laser beam directed to and focused on the surface.

A portion of the background of the present invention may be found in the following considerations.

This invention relates to methods and optical designs to image the surface surrounding a measurement point. By moving the focused laser beam in, for example, a raster scan and measuring the intensity of the reflected light, an image can be reconstructed that reports the reflectivity of the surface. The maximum lateral resolution is limited only by the diffractive properties of the focused laser source to about half the used wavelength. The maximum lateral image size is only limited by the used scanning mechanism.

The presented approach does not require the addition of an optical microscope but may employ an optical fibre with a focusing lens as parts of the interferometer. This results in a design of the scanning head which is very compact and does not generate heat. These properties are particularly beneficial in a context where the scanning head is to be used in vacuum and/or in an environment in which space is limited.

Because the image is generated through the optical path of the interferometer, it is intrinsically aligned with the laser beam of the interferometer. After recording an image the laser spot can be moved to any imaged position of the sample with sub-micrometer accuracy by using an appropriate positioner to perform an interferometry measurement. It is equally possible to perform imaging and interferometry intermittently, i.e. directly one after the other on the same spot, while some aspects of the present invention even allow for concurrent imaging and interferometry.

The present invention allows that the imaging is performed completely through the optical path of the interferometer, which may preferably be an optical-fibre based interferometer. Because the imaging path is identical with the optical path of the interferometer both are intrinsically aligned.

This allows the following exemplary and non-limiting sequence to perform interferometry measurements on samples with microscopic dimensions. First an optical reflection image is recorded of the sample by raster scanning the laser beam over the sample. Then, the laser beam can be moved to any desired point of the recorded image to perform an interferometry measurement at this position. Because no additional optical microscope is required the actual scanning head, which is connected by an optical fibre to the laser source, can be kept very rugged and compact. As imaging signal (the pixel value) the intensity of the reflected laser beam is measured.

It was realized that the reflection of the laser beam (or rather the measurement beam) allows for an imaging.

The present invention contemplates different optical designs to measure the intensity and/or quality of the reflected laser beam.

In an advantageous embodiment of an aspect of the invention the superposition of the reference beam and the reflection of the measurement beam from the surface results in a quadrature signal allowing reconstruction of the intensity of the reflected measurement beam which is independent on the superposition.

The present invention further provides for a system comprising the interferometer device according to the present invention and a positioning unit arranged for changing the incidence position of the laser beam on the surface of the sample.

In an advantageous variation of such system the positioning unit is arranged for providing a relative movement of the interferometer unit / interferometer head and the sample and/or for providing an optical scanning of the laser beam.

In a structurally simple implementation is achieved by using optical fibres. The laser-light that is reflected off the sample is collected by an interferometer head (the optics that are connected to the fibre-end to focus the laser beam and to create a reference beam for the interference measurements) and coupled back into the optical fibre. On the other end of this fibre, which can be metres away from the sample, the signal is processed to obtain the intensity. Because the reference mirror is integrated in the interferometer scanning head, constructive and destructive interference would normally also affect the absolute intensity of this signal. To address this, a quadrature signal instead of a single sinusoidal signal is used. In a Michelson interferometer implementation, the laser is modulated and the superimposed reflections of the reference and measurement beams are composed as multiple signal components that are phase-shifted. Conceptually, two signal components are used for detection that are phase shifted by $\pi/2$ (sine and cosine) forming a quadrature signal. If therefore the amplitude of the sine component is reduced due to interference, the cosine component will be increased in amplitude. From this quadrature signal, the intensity of the collected signal will scale linearly with $\sqrt{\sin(\alpha)^2 + \cos(\alpha)^2}$, which is independent on the phase shift $\alpha$ induced by interference.

It may be noted that the present invention is not limited, per se, to a particular kind of interferometer architecture or concept, and alternative to a type corresponding to a Michelson interferometer, the invention may also be implemented, for example, as a Fabry-Perot interferometer.

In a further preferred embodiment of an aspect of the invention, the interferometer device is arranged for separating a portion of the reflection of the laser beam from the surface for detection of the intensity thereof.

These features of this embodiment may be combined with further advantage with the above embodiments, variations and modifications.

In a preferred variation of the above embodiment, the interferometer device comprises a beam splitter, wherein the beam splitter is arranged for directing a portion of the reflection of the laser beam from the surface to a detector.

While a beam splitter is a commonly known means for beam separation and relatively simple in its implementation, the present invention is not limited to such beam splitter and other means for separating a portion of the reflected beam are also contemplated.

Preferably, the beam splitter is provided in the path of only the measurement beam, so that the reference beam does not reach this beam splitter. In this way, the detector is provided only with the separated portion of the measurement beam reflected from the surface, which is not (yet) affected by any interference with the reference beam.

The above variation may be implemented such that the detector is segmented such that the signals of the individual segments of the detector are indicative of an orientation of interferometer device and/or the measurement beam with respect to the surface.

In the above context, the interferometer device is preferably arranged for an adjustment of an orientation with respect to the surface based on the detection results and/or the interference device is preferably arranged for determining a local orientation of the surface based on the detection results.

In a further preferred variation the interferometer device comprises an interferometer head, a reference unit and an interferometer unit, which are coupled by means of an optical fibre element for transmitting the measurement beam to the interferometer head, for transmitting the reference beam to the reference unit and for transmitting the reflection picked up by the interferometer head to the interferometer unit, wherein the optical fibre element includes a first fibre coupler for separating the laser beam into the measurement beam and the reference beam and a second fibre coupler for separating the portion of the reflection, wherein the second fibre coupler is arranged between the first fibre coupler and the interferometer head. In the first fibre coupler also the superposition of the reflections of the reference beam and measurement beam takes place.

According to the abovementioned approach for measuring the intensity of the reflected light, a detector can be mounted in the interferometer head itself, before the reference beam is combined with the reflected beam. This can be achieved by mounting a photodiode directly onto, or close to, an additional beam-splitter in the interferometer head. The photo current is linear proportional with the intensity of the reflected laser light and can be converted by a current-to-voltage converter into a proportional signal in Volts. The advantage of such approach is that it will also work even if the quadrature signal is not available.

Furthermore, if the reflective surface is not exactly in the focal plane and/or if the surface is tilted with respect to the focal plane, the photo diode will have a higher yield (collect more light) as compared to the above case, because it does not require the reflected light to be coupled into the optical fibre which can be done only efficiently if the reflective surface lies in the focal plane.

Here, it is also possible to use a segmented photodiode, such as a quadrant photodiode. The current generated by each segment will depend on the exact orientation of the reflected laser-beam. Monitoring the difference between the segments can be used as an adjustment tool to align the interferometer head exactly normal to the reflective surface. This will also allow to discriminate whether a reduction of the intensity of the reflected measurement beam is due to a poor reflectivity of the reflective surface or due to its tilt.

The use of a quadrant photo diode further allows measuring the angle at which the laser light is reflected off the surface. From this the local tilt of the sample can be measured at each pixel. This allows reconstructing a roughness image of the sample.

It is not necessarily the case that the measurement arm and the reference arm are provided by an interferometer head, as the reference arm may be removed from the interferometer head and implemented through optical fibres. Via a fibre coupler the laser beam is split in a reference arm and a measurement arm. Furthermore, an additional photo diode can be connected via a second fibre coupler to cast a fraction of the reflected light onto a photo diode. This will allow the detection of the reflected light before it is recombined by the first fibre coupler as discussed above. The addition of this photodiode is not essential as the reflected light can also be obtained from the quadrature signal as discussed before. An advantage of the separate provision of the reference arm is that the interferometer head itself can be kept very compact as only optics as required to focus the laser beam are provided therein or even only the terminated fibre end.

It was found that the interferometer head, in the context of the invention, may be very compact, in particular, if needed, less than 1 cm$^3$.

A 2D positioner may be provided to return to a desired position on the sample for an interferometry measurement after a reflection image has been obtained. This positioner can either to move the sample or to move the interferometer head. The positioner can be based, for example, on a piezo scan stage or on voice coils, while, view of their large scan range, stepper motors or piezo stick-slip motors are preferred.

The present invention allows for a low mass of the interferometer head, which, in turn, allows for high scanning rates when the scanning interferometer head itself is scanned.

In both configurations, a sample scanner or a head scanner, millimeter sized images of 100 x 100 pixels can be acquired in less than 10 seconds.

The positioner, in particular as discussed above, can be a closed-loop positioner. This will allow returning to a desired position with up to nanometer accuracy, while even with a comparatively simple implementation a resolution better than 10 $\mu$m can be obtained, while furthermore resolutions of better than 100 nm can be achieved. The accuracy is thus below optical resolution.

As an alternative to a (2D) positioner, an optical scanning element such as a mirror galvanometer may be provided integrated in the scanning head to move the scanning beam with respect to the sample. As in conventional confocal imaging design this scanning mirror is preferably positioned in a plane that is conjugate with the back focal plane of the focusing lens.

An additional positioner (degree of freedom) can be added to move the sample along the optical axis in order to focus the measurement beam onto the sample.

An additional positioner (one or two degree(s) of freedom) can be added to tilt the sample with respect to the measurement beam. In combination with the segmented photodiode this will allow adjusting the measurement beam normal to the reflective surface.

Instead of raster-scanning the sample also other scan patterns can be used, including a line-scan or a spiral-scan. The latter has the advantage that sudden accelerations as normally occur at the beginning and end of a scan line are avoided.

The intensity of the reflected laser beam depends on the position of the reflective surface with respect to the focus of the laser. If the surface is moved up-and-down along the optical axis the intensity will vary and be highest when the focus is exactly on the surface. In this case the reflected laser-light will follow exactly the same path back and be able to enter the optical fibre. Thus a focus routine can be implemented by searching the maximum intensity as function of the distance between the interferometer head and sample.

According to the invention, the use of the interferometry head for imaging provides a very compact design of the whole instrument which allows operation under constrained and harsh conditions.

The preferred use of an optical fibre allows keeping all active components away from the sample, thus providing that no heat will be generated in the interferometer/imaging head. Thus the measurement environment will be minimally influenced.

Because the imaging path is identical with the optical path of the interferometer both are intrinsically aligned. Any alignment procedures to determine the position of the measurement beam with respect to the imaged sample are thus eliminated.

Because the interferometer laser spot and detector are used to generate an image, the used wavelength of the laser is not important. This is particularly useful for interferometers that use infrared light with a wavelength of more than 1000 nm, which cannot be imaged with conventional cameras.

Features of preferred embodiments of the invention are defined, in particular, in the dependent claims, while further advantageous features, embodiments and implementations are apparent to the skilled person from the above explanation and the following discussion.

In the following, the present invention is further elucidated and exemplified under reference to embodiments illustrated in the attached drawings, in which

Fig. 1    shows a schematic representation for illustrating a first exemplary embodiment of an interferometry device according to the present invention,

Fig. 2    shows a schematic representation for illustrating a second exemplary embodiment of an interferometry device according to the present invention,

Fig. 3    shows a schematic representation for illustrating a third exemplary embodiment of an interferometry device according to the present invention, and

Fig. 4    shows a schematic flow diagram of an exemplary embodiment of an interferometry and imaging method according to the invention.

In the attached drawings and the explanations on these drawings elements, which are in relation or in correspondence, are indicated - where expedient - by corresponding or similar reference signs, regardless of whether or not the elements are part of the same embodiment.

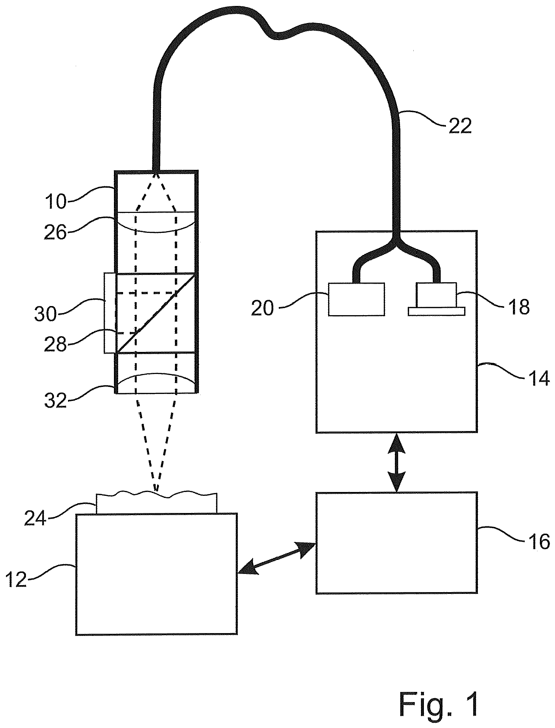

Fig. 1 shows a schematic representation for illustrating a first exemplary embodiment of an interferometry device according to the present invention,

The system illustrated in Fig. 1 includes a compact interferometer head 10, a closed-loop 3D positioner 12, an interferometer unit 14 and a control and data processing unit 16.

The interferometer unit 14 hosts a laser source 18 and a photo diode 20 for the interferometric measurements. The interferometer unit 14 is connected to the interferometer head 10 with an optical fibre 22.

In order to create an image of a sample 24 arranged on the positioner 12, the interferometer head 10 is raster scanned with respect to the sample 24.

The interferometer head 10 focuses the laser light provided by the laser source 18 via the optical fibre 22 onto the sample 24. The reflected light is collected by the interferometer head 10 and further processed by the interferometer unit 14 and eventually the control and data processing unit 16.

The intensity of the reflected light is calculated from the quadrature signal.

The interferometer head 10 includes collimating optics 26 to collimate the laser beam that is emitted by the fibre (the collimating optics 26 can be or include, for example, a GRIN lens or a lens system), a beam-splitter 28 to split the beam in a reference beam and a measurement beam, a mirror 30 provided (e.g. coated) on one side of the beam-splitter to create a stable reference arm, and focusing optics 32 (including a single lens or a lens system) to focus the collimated laser beam on the sample 24.

The arrangement and operation of the interferometer head 10 and the positioner 12 basically correspond to those already known interferometer heads and the positioners used in comparable approaches.

In this embodiment, the intensity of the reflected light (the laser beam reflected from the surface of the sample 24) can be detected by the photo diode 20 for the optical imaging, as the superposition of the reflected light and the reference beam constitutes a quadrature signal from which the intensity of the reflected light can be calculated which is independent on the superposition and this independent from displacements and vibrations of the surface.

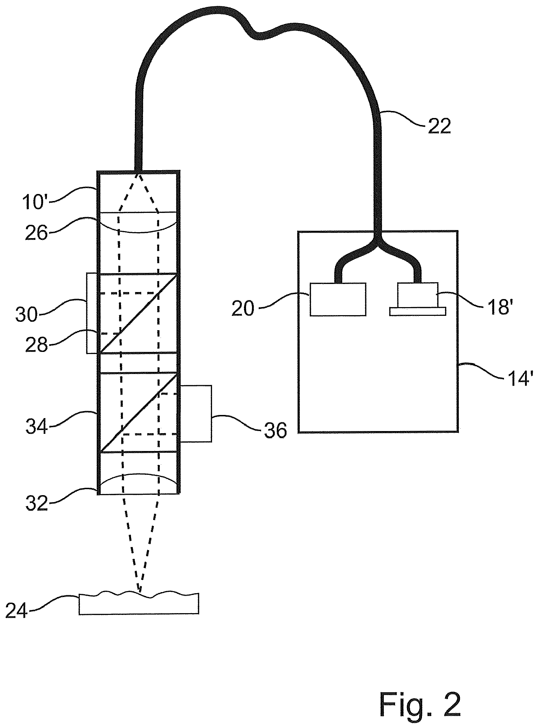

Fig. 2 shows a schematic representation for illustrating a second exemplary embodiment of an interferometry device according to the present invention.

The components of the system as illustrated in Fig. 2 largely correspond to those of the system illustrated in Fig. 1, so that a detailed description of such corresponding components is not necessary.

Differing from the interferometer head 10 shown in Fig. 1, the interferometer head 10' of Fig. 2 additionally includes, between the beam splitter 28 providing for the reference arm and the focusing optics 32 a further beam splitter 34 provided with a further photo diode 36. The further beam splitter 34 separates a portion of the laser light reflected from the sample 24 from the measurement arm and directs such portion to the further photo diode 36, making it possible to directly detect the intensity of the reflected light.

In addition to the determination of the overall intensity, the photo diode 36 may obtain further information on the spatial arrangement, provided that the photo diode 36, e.g. due to segmentation thereof, is sensitive in such regard.

As the reflected light is detected before it is recombined with the light from the reference arm, this method provides a reflection signal even if the quadrature signal implementation of the interferometer unit 14' is not active.

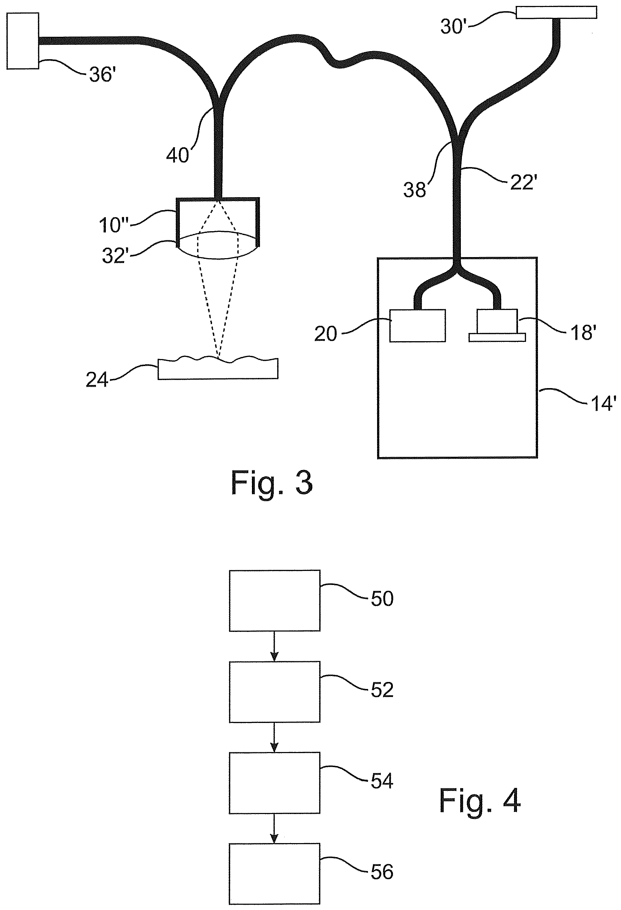

Fig. 3 shows a schematic representation for illustrating a third exemplary embodiment of an interferometry device according to the present invention.

Different from the embodiments illustrated in Fig. 1 or Fig. 2, in the embodiment illustrated in Fig. 3, the reference arm is removed from the interferometer head 10" and implemented through optical fibres.

With the interferometer unit 14' corresponding to that of the embodiment shown in Fig. 2, the laser beam provided by the laser source 18' is split, within the overall fibre 22', for a reference arm and a measurement arm by means of a 2 x 1 fibre coupler 38.

Within the measurement arm, i.e. "downstream" from the fibre coupler 38, there is provided a further 2 x 1 fibre coupler 40, which is arranged for providing the light reflected from the sample 24 back to the interferometer unit 14' and to a photo diode 36'. Similar to the case of Fig. 2, the photo diode 36' receives the reflected measurement light before it is combined again with the light from the reference arm, which is reflected back to the fibre coupler 38 by a mirror 30'. In the fibre coupler 38 the superposition of the reflected reference and measurement beams takes place, after which this superimposed signal is guided back to the interferometer unit 14'.

Unlike the situations in Fig. 1 and 2, the interferometer head 10" includes only the focusing optics 32' for focusing the laser beam provided by the fibre 22' on the surface of the sample 24.

In a variation of such arrangement (not shown), an interferometer unit 14 as provided for the first embodiment may be used, so that there would be the possibility to determine the intensity of the reflected light from the light arriving at the photo diode 20, as due to the quadrature nature of the detection signal the intensity of the reflected measurement beam can be determined independent from the superposition of the reflected reference light and measurement light. In this case, the photodiode 36' is not required.

Fig. 4 shows a schematic flow diagram of an exemplary embodiment of an interferometry and imaging method according to the invention.

In step 50, interferometer equipment is provided such that an intensity of light reflected from a surface may be detected. This step may include, in alternative or in combination, the configuration of a laser source for a quadrature signal and/or the provision of an additional detector (e.g. a photo diode) for detecting an intensity of a portion of the reflected light prior to combination of such light of a measurement arm with light of the reference arm.

In step 52, the such configured equipment is used for scanning the surface of the sample.

In step 54, if necessary, arrangements are made so to position the measurement beam to the desired position in the scanned image.

In step 56, an interferometry measurement at least one position previously scanned during step 52 is performed.

Even if in the drawings different aspects or features of the invention are shown in combination, the skilled person will appreciate - unless indicated otherwise - that the combinations shown and discussed are not exhaustive and variations thereof are possible. In particular, corresponding elements or feature complexes may be mutually exchanged between different embodiments.

**Claims**

1. An interferometer device for measuring a distance to and/or motion of a surface of a sample (24) using a laser beam directed to and focused on the surface, comprising a light source (18) providing the laser beam which is separated into a reference beam and a measurement beam,
wherein the device, in addition to interferometry, is arranged to detect an intensity of a reflection of the laser beam from the surface, so to allow for an imaging of the surface,
wherein a detection path of the device is arranged to provide an intensity signal that is independent on the superposition of the reference beam and a reflection of the measurement beam from the surface, comprising a laser source that is modulated such that the superimposed reflections of the reference and measurement beams are composed as two signal components that are phase-shifted by $\pi/2$ (sine and cosine) thus forming a quadrature signal, from which the intensity of the collected signal will scale linearly with $\sqrt{\sin(\alpha)^2 + \cos(\alpha)^2}$, which is independent on the phase shift $\alpha$ induced by interference, comprising a positioning unit (12) arranged for changing the incidence position of the laser beam on the surface of the sample (24), wherein the positioning unit (12) is arranged for providing a relative movement of the interferometer unit / interferometer head (10, 10', 10") and the sample (24) and/or wherein the positioning unit is arranged for providing an optical scanning of the laser beam.

2. The interferometer device according to claim 1, wherein the positioning unit is combined with a position measurement system such that after imaging a surface, the laser beam can return to a desired position on the sample to perform a measurement.

3. The interferometer device according to any one of the preceding claims,
wherein the wavelength of the laser source is more than 1000 nm.

4. The interferometer device according to any one of the preceding claims, arranged for separating a portion of the reflection of the laser beam from the surface for detection of the intensity thereof before the measurement beam is recombined with the reference beam.

5. The interferometer device according to claim 4, comprising a beam splitter (34),
wherein the beam splitter (34) is arranged for directing a portion of the reflection of the laser beam from the surface to a detector (36).

6. The interferometer device according to claim 5, further comprising the detector (36),
wherein the detector (36) is segmented such that detection results of segments of the detector (36) are indicative of an orientation of the interferometer device and/or the measurement beam with respect to the surface.

7. The interferometer device according to claim 6, wherein the device is arranged for an adjustment of an orientation with respect to the surface based on the detection results and/or the device is arranged for determining a local orientation of the surface based on the detection results.

8. The interferometer device according to any of the preceding claims, comprising an interferometer head (10"), a reference unit (30') and an interferometer unit (14'), which are coupled by means of an optical fibre element (22') for transmitting the measurement beam to the interferometer head (10"), for transmitting the reference beam to the reference unit (30') and for transmitting the reflection picked up by the interferometer head (10") to the interferometer unit (14'),
wherein the optical fibre element (22) includes a first fibre coupler (38) for separating the laser beam into the measurement beam and the reference beam and a second fibre coupler (40) for separating the portion of the reflection,
wherein the second fibre coupler (40) is arranged between the first fibre coupler (38) and the interferometer head (10").

9. An interferometry and imaging method, comprising:

   providing a laser beam which is separated into a reference beam and a measurement beam,
   arranging (50) a detection path to provide an intensity signal that is independent on the superposition of the reference beam and a reflection of the measurement beam from the surface according to claim 1, and
   positioning the laser beam to a point of interest and/or raster-scanning the measurement beam over a region of interest, and
   detecting the intensity of a reflection of the laser beam from the surface, so to allow for an imaging of the surface,
   wherein the method comprises, concurrent with, in addition to, or following the detecting step, an interferometry step (56) for measuring a distance to and/or motion of a single point or a surface of a sample (24) using the laser beam directed to and focused on the surface.

Fig. 1

Fig. 2

Fig. 3

Fig. 4

Europäisches
Patentamt

European
Patent Office

Office européen
des brevets

# EUROPEAN SEARCH REPORT

**Application Number**

EP 18 17 9460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2011/090508 A1 (REMBE CHRISTIAN [DE] ET AL) 21 April 2011 (2011-04-21) * the whole document * ----- | 1-9 | INV. G01B9/02 G01B9/04 G02B21/00 |
| X | US 2004/075842 A1 (DUNN THOMAS J [US] ET AL) 22 April 2004 (2004-04-22) * abstract; figures 1-3 * * paragraph [0024] - paragraph [0043] * ----- | 1-3,8,9 | |
| X | US 7 605 925 B1 (CHEN DONG [US]) 20 October 2009 (2009-10-20) * abstract; figures 1,2 * * column 6 - column 8 * ----- | 1-3,8,9 | |
| X | US 8 077 325 B2 (UNIV. DUKE) 13 December 2011 (2011-12-13) * paragraph [0024] - paragraph [0043] * * abstract; figures 1-3 * ----- | 1-9 | |

**TECHNICAL FIELDS SEARCHED (IPC)**

G01B
G02B

The present search report has been drawn up for all claims

| Place of search | Date of completion of the search | Examiner |
|---|---|---|
| Munich | 17 September 2018 | Stanciu, C |

EPO FORM 1503 03.82 (P04C01)

## ANNEX TO THE EUROPEAN SEARCH REPORT
## ON EUROPEAN PATENT APPLICATION NO.

EP 18 17 9460

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2018

| Patent document cited in search report | | Publication date | Patent family member(s) | | Publication date |
|---|---|---|---|---|---|
| US 2011090508 | A1 | 21-04-2011 | CN 102042866 A | | 04-05-2011 |
| | | | DE 102009049932 A1 | | 21-04-2011 |
| | | | FR 2951537 A1 | | 22-04-2011 |
| | | | GB 2474585 A | | 20-04-2011 |
| | | | JP 5455238 B2 | | 26-03-2014 |
| | | | JP 2011085589 A | | 28-04-2011 |
| | | | US 2011090508 A1 | | 21-04-2011 |
| US 2004075842 | A1 | 22-04-2004 | AU 2003301582 A1 | | 13-05-2004 |
| | | | EP 1556666 A2 | | 27-07-2005 |
| | | | JP 2006504095 A | | 02-02-2006 |
| | | | KR 20050056256 A | | 14-06-2005 |
| | | | US 2004075842 A1 | | 22-04-2004 |
| | | | WO 2004038322 A2 | | 06-05-2004 |
| US 7605925 | B1 | 20-10-2009 | NONE | | |
| US 8077325 | B2 | 13-12-2011 | EP 1839012 A2 | | 03-10-2007 |
| | | | US 2006256343 A1 | | 16-11-2006 |
| | | | US 2010201991 A1 | | 12-08-2010 |
| | | | WO 2006078839 A2 | | 27-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0352789 A2
- EP 1870761 A1
- DE 102009049932


**Non-patent literature cited in the description**

- **S.M. VAN NETTEN.** Laser interferometer microscope for the measurement of nanometer vibrational displacements of a light-scattering microscopic object. The Journal of the Acoustical Society of America, 1988, vol. 83, 1667

- **A. BOSSEBOEUF et al.** Versatile microscopic profilometer-vibrometer for static and dynamic characterization of micromechanical devices. *Proc. SPIE 3825, Microsystems Metrology and Inspection,* 15 September 1999, vol. 123